# EUROPEAN PATENT APPLICATION

(11) **EP 4 814 680 A1**
(43) Date of publication of application: **30.09.2026**
(21) Application number: 25165597.3
(22) Date of filing: 24.03.2025
(51) Int. Cl.: G06F 3/04845, G06F 3/04817, G06F 3/04842, G06F 9/451, G05B 23/00

(54) **METHOD AND SYSTEM OF AUTOMATICALLY GENERATING SUBSET HMI SCREENS**

(71) Applicant: Siemens Aktiengesellschaft, 80333 München (DE)
(72) Inventor: Sahu, Sukalyan, 560100 Bangalore, Karnataka (IN); Samala, Naveen Kuma, 560100 Bangalore, Karnataka (IN)
(74) Representative: Isarpatent

(57) **Abstract**

A method for generating a subset Human-Machine Interface (HMI) screen (600) for an industrial control system (102) is disclosed. The method involves capturing a subset region from a superset HMI screen (106) using a cropping tool to record pixel coordinates of the selected region. One or more engineering objects (108A-N) within the subset region are detected by comparing spatial attributes of the region with predefined object definitions stored in a knowledge base (126). Metadata of the detected engineering objects (108AN) is modified by adjusting layout parameters, including position and resolution, based on screen parameters of the target HMI screens (106). A subset HMI screen (600) is then generated, incorporating the modified metadata to display detailed information about the detected engineering objects (108A-N). This automated process significantly reduces the manual effort required for subset screen creation, improving efficiency and accuracy in industrial control system interfaces.

## Description

The present invention relates to the field of industrial automation and control systems, specifically to methods and systems for generating subset Human-Machine Interface (HMI) screens. It focuses on automating the creation of customized HMI screens for enhanced monitoring and control of specific processes or subsystems within industrial environments.

Human-Machine Interface (HMI) screens play a critical role in industrial control systems by providing operators with a visual representation of processes, equipment, and operational data. These interfaces enable real-time monitoring, control, and diagnostics of industrial systems, ensuring efficient and safe operations. In complex industrial environments, such as manufacturing plants, power generation facilities, and chemical processing units, HMI screens are indispensable tools for managing interconnected systems and ensuring process optimization.

Traditionally, HMI screens are designed to provide comprehensive views of the entire industrial process, often referred to as superset HMI screens. While superset HMI screens offer a high-level overview of operations, they can be overwhelming due to the volume of information displayed. Operators frequently need to focus on specific subsystems, equipment, or localized areas within the industrial environment. To address these needs, subset HMI screens are created, offering a granular view of particular sections or processes within the system. Subset HMI screens enable operators to concentrate on specific tasks or troubleshooting efforts, enhancing usability and operational efficiency.

However, the conventional process for generating subset HMI screens is highly manual and time-consuming. Engineers must manually identify relevant engineering objects, configure their layouts, and adjust display parameters to ensure the subset screens are both functional and visually coherent. This labor-intensive process is prone to errors, inconsistencies, and inefficiencies, particularly in large-scale industrial systems with numerous interconnected components.

Moreover, the lack of automation in subset HMI screen creation increases the engineering effort required to customize screens for different operational contexts, user preferences, and display environments. As industrial systems grow in complexity, there is a pressing need for automated methods and tools that can streamline the creation of subset HMI screens while maintaining accuracy, consistency, and adaptability.

Thus, it is an object of the present invention to provide a method and system for generating a subset human-machine interface (HMI) screen for an industrial control system.

The object of the present invention is achieved by a method for generating a subset human-machine interface (HMI) screen for an industrial control system. In one example, the present invention is implemented a software that is coded within an automation module. The automation module is a dedicated software component or package that contains a program necessary to execute each step of the method. The software for the program is written using programming languages suitable for industrial automation, such as C++, Python, or Java, or specialized languages used in industrial control systems, such as Structured Text (ST) or Function Block Diagram (FBD) under IEC 61131-3 standards. The software for the program includes modules for data input processing, scaling algorithms, pattern recognition algorithms, graphical rendering algorithms, and user interaction handling, ensuring that each functional aspect of the method is implemented programmatically within the automation module.

The software for the program is stored in a memory unit associated with the automation module, such as non-volatile memory in an industrial controller or a dedicated computing system. The automation module is integrated into the broader architecture of the industrial control system, enabling the software for the program to interact with data sources, such as sensors, actuators, and the knowledge base containing predefined object definitions. The software for the program is designed to be modular and scalable, allowing the automation module to execute the method for generating a subset human-machine interface (HMI) screen efficiently, even in complex industrial environments with a large number of engineering objects.

A processor within the industrial control system is configured to execute the software to perform the method for generating a subset human-machine interface (HMI) screen. The processor is a central processing unit (CPU) or a microcontroller capable of performing high-speed computations and executing multiple program instructions concurrently. The processor is configured to read the software for the program from the memory associated with the automation module and interprets the instructions line by line or block by block.

The method comprises capturing, from a superset human-machine interface (HMI) screen, a subset region selection by recording pixel coordinates of a subset region via a cropping tool. The superset HMI screen is a graphical interface representing an overall process overview of an industrial system. The superset HMI screen provides a comprehensive visual representation of the industrial system, allowing operators to monitor and control various processes at a high level.

The subset HMI screen is a graphical interface generated from the superset HMI screen. The subset HMI screen is configured to display detailed information for a selected process of the industrial system. The subset HMI screen focuses on a specific portion of the system, presenting fine-grained details for targeted analysis and decision-making.

The method further comprises identifying one or more coordinates and one or more dimensions of the subset region based on the recorded pixel coordinates. The coordinates and dimensions specify the exact boundaries of the selected region, enabling precise extraction of relevant information from the superset HMI screen.

The method further comprises retrieving predefined object definitions from a knowledge base. The predefined object definitions include a plurality of spatial attributes such as size, shape, and position. The knowledge base is a centralized repository that stores structured information about engineering objects, their attributes, and their relationships, enabling consistent and accurate analysis.

The method further comprises comparing the identified one or more coordinates and the one or more dimensions of the subset region with the spatial attributes of the predefined object definitions. This comparison ensures that the extracted subset region aligns with the predefined characteristics of engineering objects, allowing accurate detection and representation.

The method further comprises detecting one or more engineering objects within the subset region based on the comparison. Engineering objects represent physical or logical components of the industrial system, such as pumps, valves, or control units, which are crucial for process monitoring and management.

The method further comprises modifying metadata of the detected one or more engineering objects by adjusting a plurality of layout parameters associated with the one or more engineering objects. The metadata includes descriptive and operational information about the engineering objects, such as their identifiers, configurations, and visual properties. The plurality of layout parameters are retrieved from the knowledge base. The plurality of layout parameters comprise a screen resolution parameter and a position parameter of the subset HMI screen. The screen resolution parameter defines the level of detail visible on the screen, while the position parameter specifies the placement of objects within the HMI interface.

The plurality of layout parameters are adjusted based on one or more screen parameters of one or more HMI screens. The screen parameters comprise a size of the one or more HMI screens. The screen size determines the available display area for rendering the subset HMI screen. The screen parameters also include a location of the one or more HMI screens. The screen location refers to the physical or logical position of the HMI screen within a multi-screen setup.

The layout parameters are adjusted by applying a scaling algorithm to the one or more screen parameters. The scaling algorithm is configured to adjust the plurality of layout parameters to ensure that the subset HMI screen maintains visual coherence when displayed on the one or more HMI screens. The scaling algorithm ensures that objects and information are proportionally resized and positioned for optimal readability and usability across different screen configurations.

The method further comprises applying the adjusted layout parameters to the detected engineering objects. This step updates the visual and functional representation of the engineering objects to align with the adjusted layout parameters.

The method further comprises generating a subset HMI screen incorporating the modified metadata. The subset HMI screen is constructed to include the updated engineering objects, ensuring relevance and accuracy of the displayed information.

The method further comprises rendering the subset HMI screen based on the modified metadata. Rendering involves visually presenting the subset HMI screen on the display, enabling users to interact with the information seamlessly. The subset HMI screen is configured to display information associated with the detected one or more engineering objects. This reduces the human effort required for subset screen creation through automation. The automated generation of subset screens minimizes manual intervention, enhancing efficiency and reducing potential errors.

The method further comprises receiving a request for additional information on the detected one or more engineering objects. This request allows users to obtain deeper insights into specific engineering objects as needed.

The method further comprises displaying the additional information on the subset HMI screen. The additional information provides expanded details about the engineering objects, aiding in decision-making and troubleshooting.

The object of the present invention is also achieved by an industrial control system capable of automatic generation of a subset HMI screen. The industrial control system comprises one or more processor(s) and a memory coupled to the processor. The memory comprises an automation module stored in the form of machine-readable instructions executable by the processor. The automation module is configured for performing the method as described above.

The object of the present invention is also achieved by a computer-program product, having machine-readable instructions stored therein, that when executed by a processing unit is configured to perform the above described method steps.
- FIG 1: is a block diagram of an industrial environment capable of automatic generation of a subset human-machine interface (HMI) screen within an industrial control system, according to an embodiment of the present invention;
- FIG 2: is a block diagram of an industrial control system, such as those shown in FIG. 1, in which an embodiment of the present invention can be implemented;
- FIG 3: is a block diagram of an automation module, such as those shown in FIG 2, in which an embodiment of the present invention can be implemented; and
- FIG 4: is a process flowchart illustrating an exemplary method of automatically generating subset human-machine interface (HMI) screen within an industrial control system, according to an embodiment of the present invention.
- FIG 5: is a exemplary illustration of a superset Human Machine Interface (HMI) screen, according to an embodiment of the present invention.
- FIG 6: is a exemplary illustration of a subset Human Machine Interface (HMI) screen, according to an embodiment of the present invention.

Various embodiments are described with reference to the drawings, wherein like reference numerals are used to re-fer the drawings, wherein like reference numerals are used to refer to like elements throughout. In the following de-scription, for the purpose of explanation, numerous specific details are set forth in order to provide thorough understanding of one or more embodiments. It may be evident that such embodiments may be practiced without these specific details.

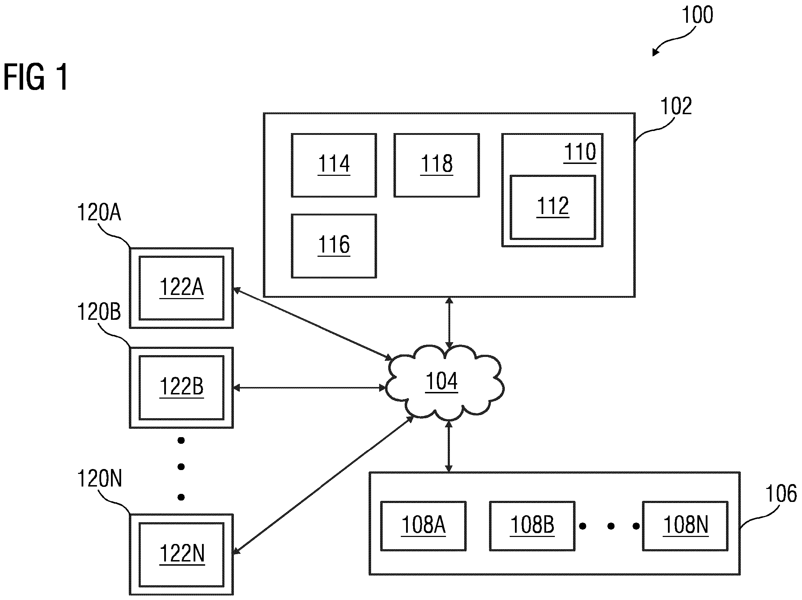

FIG 1 is a block diagram of an industrial environment 100 capable of automatic generation of an subset Human Machine Interface (HMI) screen, according to an embodiment of the present invention. In FIG 1, the industrial environment 100 includes an industrial control system 102, one or more client devices 120A-N. As used herein, "industrial environment" refers to a processing environment comprising configurable computing physical and logical resources, for example, networks, servers, storage, applications, services, etc., and data distributed over a platform, such as cloud computing platform.

The industrial environment 100 provides on-demand network access to a shared pool of the configurable computing physical and logical resources. The industrial control system 102 is communicatively connected to a industrial plant via the network 104 (such as Local Area Network (LAN), Wide Area Network (WAN), Wi-Fi, Internet, any short range or wide range communication). The industrial control system 102 is also connected to the one or more client devices 120A-N via the network 104. An overall view of working of an industrial plant is provided in a superset Human Machine Interface (HMI) screen 106.

The superset Human Machine Interface (HMI) screen 106 comprises a plurality of engineering objects 108A-N. Examples of the plurality of engineering objects 108A-N may include, for example, graphical representation of a programmable logic controller, one or more field devices, or any other automation devices. Examples of the one or more field devices includes but is not limited to, motors, rotors, mixers, furnaces, heaters, refrigerators, control valves, pumps, and actuators.

Each engineering object of the plurality of engineering objects 108A-N has a plurality of properties which are described in a technical commissioning document which are a plurality of documents such as connection schemas, bill of materials, and product manuals. The plurality of properties includes but is not limited to information associated with compatibility of each engineering objects with other engineering objects of the plurality of engineering objects 108A-N, temperature rating, pressure rating, a function in the industrial plant, configuration settings associated with the plurality of engineering objects 108A-N and residual life of the plurality of engineering objects 108A-N. The plurality of documents comprises process related documents like process operation description document, process flowchart, and process control philosophy, piping and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

The one or more client devices 120A-N may be a desktop computer, laptop computer, tablet, smart phone and the like. Each of the one or more client devices 120A-N is provided with an engineering tool 122A-N for generating and/or editing the plurality of engineering projects. For example, the one or more client devices 120A-N can access the industrial control system 102 for automatically generating one or more engineering projects. The one or more client devices 120AN can access cloud applications (such as providing performance visualization of the plurality of engineering objects 108A-N via a web browser). Throughout the specification, the terms "client device" and "user device" are used interchangeably.

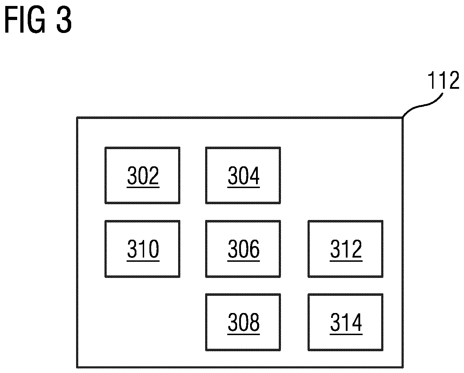

The industrial control system 102 may be a standalone server deployed at a control station or may be a remote server on a cloud computing platform. In a preferred embodiment, the industrial control system 102 may be a cloud-based control system. The industrial control system 102 is capable of delivering applications (such as cloud applications) for managing the industrial plant. The industrial control system 102 may comprise a platform 110 (such as a cloud computing platform), an automation module 112, a server 114 including hardware resources and an operating system (OS), a network interface 116 and a database 118. The network interface 116 enables communication between the industrial control system 102, the industrial plant, and the one or more client device(s) 120A-N. The interface (such as cloud interface)(not shown in FIG 1) may allow the engineers at the one or more client device(s) 120A-N to access the one or more engineering projects stored at the industrial control system 102 and perform one or more actions on the one or more engineering projects as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating ethe one or more engineering projects. The automation module 112 further comprises a knowledge repository 126 comprising at least one name graph. Details of the automation module 112 is explained in FIG. 3.

The database 118 stores the information relating to the industrial plant and the one or more client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the plurality of engineering objects 108A-N, test results, simulation results, status messages, one or more simulation instances, graphical programs, program logics, program logic patterns, product manuals of the plurality of engineering objects 108A-N and engineering object properties, one or more engineering object blocks, relationship information between the engineering objects, requirements, program update messages and the like.

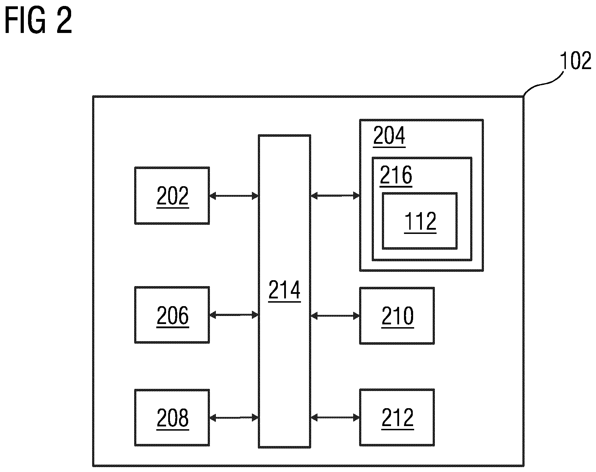

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network inter-face 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of ma-chine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

The automation module 112 is configured to automatically generate a subset HMI screen for the industrial plant. The computer-readable code within the module is meticulously crafted to perform a series of complex tasks, including the analysis of technical commissioning documents, identification of engineering objects, determination of metadata tags, and selection and application of appropriate Low-code models on metadata tags. The industrial plant, on the other hand, is a large-scale facility where industrial processes are carried out to manufacture goods or process raw materials. The industrial plant has a plurality of implementations which vary widely in function and complexity, ranging from power plants, which generate electricity, to refineries, which process crude oil into usable products like gasoline and diesel, to manufacturing plants that produce consumer goods. Each type of industrial plant has a unique set of requirements and challenges, necessitating a tailored engineering project to address its specific needs. For instance, a power plant might require detailed engineering for turbines, boilers, generators, and cooling systems, while a food processing plant would focus on sanitary design, refrigeration systems, and automated packaging lines.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the industrial control system 102. The communication interface 208 allows the one or more engineering applications running on the client devices 120AN to import/export one or more engineering projects into the industrial control system 102.

The input-output unit 210 may include input devices a key-pad, touch-sensitive display, camera (such as a camera receiving gesture-based inputs), etc. capable of receiving one or more input signals, such as user commands to pro-cess the generated engineering project. Also, the input-output unit 210 may be a display unit for displaying a graphical user interface which visualizes the superset HMI screen 106 to the user. The bus 214 acts as inter-connect between the processing unit 202, the memory 204, and the input-output unit 210.

The network interface 212 is configured to handle network connectivity, bandwidth and network traffic between the industrial control system 102, the client devices 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the pre-sent disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and de-scribed. The remainder of the construction and operation of the industrial control system 102 may conform to any of the various current implementation and practices known in the art.

When executed by the processor 202, the automation module 112 is configured to cause the processor 202 to generate a subset human-machine interface (HMI) screen 106 within an industrial control system 102. The subset HMI screen refers to a graphical interface that represents a specific section or process within the industrial system. The subset HMI screen is derived from a larger, comprehensive interface, often referred to as a superset HMI screen 106, which provides an overview of the entire process or system. For example, in a factory automation setup, the superset HMI screen 106 displays the entire plant's layout and process flow, while the subset HMI screen focuses on a specific production line or a particular machine. The subset HMI screen allows operators to monitor and control finer details of a specific part of the industrial process, such as temperature settings for a furnace or pressure levels in a pipeline.

The industrial control system 102 is a framework that integrates hardware and software to monitor, control, and automate industrial processes. The industrial control system 102 is essential in industries such as manufacturing, energy, oil and gas, and pharmaceuticals. The industrial control system 102 typically includes sensors, actuators, controllers, and HMI screens 106 that allow operators to interact with the system. For instance, in a pharmaceutical production facility, the industrial control system 102 may automate the mixing process for drug formulations while providing real-time data on critical parameters such as ingredient proportions, mixing time, and environmental conditions. The HMI screens 106 in the industrial control system 102 serve as the primary means for operators to access this data and make informed decisions.

The automation module 112 is configured to cause the processor 202 to generate a subset HMI screen for the industrial control system 102 to enhance operational efficiency, reduce engineering effort, and improve accuracy. The creation of the subset HMI screen enables operators to focus on specific areas of the industrial process without being overwhelmed by the complexity of the entire industrial control system 102. For example, during a maintenance task, an operator may need to monitor only the cooling system within a manufacturing plant. The subset HMI screen, which isolates and highlights the cooling system's parameters, ensures that an operator can easily access relevant information. The automation module 112 is configured to cause the processor 202 to generate the subset HMI screen, reducing the manual effort required by engineers to create detailed process screens. Automation tools, such as the SCADA snapper solution, can extract, align, and position engineering objects 108A-N from the superset HMI screen 106 to generate the subset HMI screen more efficiently. For instance, when an engineer selects a specific area on the superset HMI screen 106 representing a boiler system, the processor 202 can generate a subset HMI screen that includes detailed controls and real-time data for the boiler, adjusted to the appropriate screen size and resolution.

The automation module 112 is configured to cause the processor 202 to capture a subset region selection from a superset HMI screen 106 by utilizing a cropping tool to record pixel coordinates of the subset region. The superset HMI screen 106 serves as a comprehensive graphical representation of an entire industrial process, providing operators with a high-level view of interconnected systems and their operations. The cropping tool is a software utility integrated into the interface, allowing engineers or operators to define a specific area of interest on the superset HMI screen 106 with precision. The cropping tool operates by enabling the user to drag a selection boundary across the superset HMI screen 106, thus designating one or more spatial parameters of the subset region.

The pixel coordinates recorded by the cropping tool are vital for precisely identifying the location and size of the subset region on the superset HMI screen 106. For example, an engineer working on a superset HMI screen 106 for a chemical manufacturing plant may focus on a distillation unit section. The engineer uses the cropping tool to draw a rectangular boundary starting from pixel coordinate (150, 200) and ending at pixel coordinate (600, 400). The cropping tool is configured to process pixel coordinates to define the subset region that includes critical engineering objects 108A-N such as temperature sensors, pressure monitors, and flow control valves located within the distillation unit.

The automation module 112 is configured to cause the processor 202 to identify one or more coordinates and one or more dimensions of the subset region based on the recorded pixel coordinates. The one or more coordinates of the subset region refer to a specific starting and ending pixel location on the superset HMI screen 106, which defines a set of boundaries of the selected area. For example, if an operator selects a rectangle on the superset HMI screen 106, the one or more coordinates include a top-left pixel position and a bottom-right pixel position of the rectangle. The one or more dimensions of the subset region are derived from the difference between the recorded pixel coordinates, such as the width and height of the rectangular selection.

The automation module 112 is configured to cause the processor 202 to retrieve a plurality of predefined object definitions from the knowledge repository 126. The plurality of predefined object definitions describe one or more characteristics of engineering objects 108A-N present on the superset HMI screen 106 and include a plurality of spatial attributes such as size, shape, and position. For instance, in one example, the plurality of predefined object definitions in the knowledge repository 126 specifies that a pump object is represented as a circular shape with a specific diameter, while a valve object is represented as a rectangular shape with defined width and height. The knowledge repository 126 serves as a repository that stores the plurality of predefined object definitions along with associated metadata, allowing the automation module 112 to recognize and categorize one or more engineering objects 108A and 108B within the subset region.

The automation module 112 is configured to cause the processor 202 to compare the identified one or more coordinates and the one or more dimensions of the subset region with the plurality of spatial attributes of the predefined object definitions. The comparison process comprises analyzing the one or more coordinates and the one or more dimensions of the subset region in relation to size, shape, and position attributes stored in the knowledge repository 126. The automation module 112 employs a spatial matching algorithm to perform the comparison. The spatial matching algorithm is configured to evaluate whether one or more geometric properties of the subset region overlap with or correspond to the plurality of spatial attributes of the one or more engineering objects 108A and 108B described in the predefined object definitions.

For example, the automation module 112 may employ a bounding box intersection algorithm to assess whether the bounding box of the subset region intersects with the bounding boxes of predefined engineering objects 108A-N. Alternatively, the automation module 112 may use a template matching algorithm to compare the subset region with stored templates of predefined engineering objects 108A-N and determine similarity scores. The automation module 112 can also implement a shape matching algorithm that compares the contours or geometric outlines of the subset region with the spatial attributes of the predefined object definitions. Inputs to the spatial matching algorithm include the pixel coordinates of the subset region, the one or more dimensions of the subset region, and the plurality of spatial attributes of the predefined object definitions stored in the knowledge repository 126, such as size, shape, and position. Outputs of the spatial matching algorithm comprise a list of detected engineering objects 108A-N within the subset region, along with associated confidence scores indicating the degree of match between the subset region and the predefined object definitions. For example, if the subset region contains a rectangular area with specific dimensions, the spatial matching algorithm may output a pump and a valve as detected engineering objects 108A-N with respective confidence scores of 95% and 89%.

The spatial matching algorithm is trained using a dataset comprising labeled examples of engineering objects 108A-N and their corresponding spatial attributes, including size, shape, and position. The training dataset includes images or graphical representations of HMI screens 106 annotated with the spatial attributes of engineering objects 108A-N, such as pumps, motors, and valves. For example, the training dataset may contain an image of a superset HMI screen 106 with bounding boxes labeled as representing a pump with a circular shape and a diameter of 50 pixels or a valve with a rectangular shape and dimensions of 100 pixels by 50 pixels. The training dataset ensures that the spatial matching algorithm learns to accurately detect engineering objects 108A-N based on their spatial attributes and geometric properties. The automation module 112, by employing the spatial matching algorithm trained on such datasets, ensures precision in identifying one or more engineering objects 108A and 108B within the subset region by leveraging the predefined object definitions stored in the knowledge repository 126.

For example, if the subset region, identified on the superset HMI screen 106, has coordinates and dimensions corresponding to a rectangular area of 200 pixels in width and 100 pixels in height, the spatial matching algorithm is configured to check the knowledge repository 126 for predefined object definitions that match a rectangular object of similar size and position. The spatial matching algorithm is further configured to check tolerance thresholds to account for variations in object dimensions or alignment. By comparing the identified one or more coordinates and the one or more dimensions of the subset region with the spatial attributes of the predefined object definitions, the spatial matching algorithm accurately detects and classifies a set of engineering objects 108A-N located within the subset region.

The automation module 112 is configured to cause the processor 202 to detect one or more engineering objects 108A and 108B within the subset region based on the comparison. The one or more engineering objects 108A and 108B represent physical or logical components of an industrial process that are visualized on the superset HMI screen 106. The one or more engineering objects 108A and 108B are manifested as graphical elements, such as icons, symbols, or shapes, which correspond to devices, sensors, actuators, or control units. For example, a motor may be represented by a circular symbol, a valve by a rectangular icon, and a temperature sensor by a triangle with numerical annotations indicating the temperature value. The one or more engineering objects 108A and 108B carry metadata that defines their attributes, such as their functional purpose, operational parameters, and spatial characteristics.

The detection of the one or more engineering objects 108A and 108B within the subset region involves analyzing the one or more coordinates and the one or more dimensions of the subset region in relation to the plurality of spatial attributes of the predefined object definitions stored in the knowledge repository 126. The detection process identifies whether any graphical elements within the subset region match predefined criteria for the one or more engineering objects 108A and 108B. The automation module 112 employs a pattern recognition algorithm to facilitate the detection of the one or more engineering objects 108A and 108B. The pattern recognition algorithm evaluates visual properties of the graphical elements, such as shape, size, position, color, and orientation, and compares them with the plurality of spatial attributes defined in the predefined object definitions.

For example, if the subset region selected by the cropping tool contains a rectangular graphical element located at specific pixel coordinates and dimensions, the pattern recognition algorithm is configured to retrieve the predefined object definitions from the knowledge repository 126. The pattern recognition algorithm evaluates whether the rectangular graphical element matches the plurality of spatial attributes of any predefined engineering object 108A-N, such as a valve. The pattern recognition algorithm is configured to analyze a plurality of factors such as a width-to-height ratio of the rectangle, an alignment of the element within the subset region, and any associated metadata, such as labels or annotations. If the graphical element satisfies the predefined criteria for a valve, the pattern recognition algorithm is configured to confirm the detection of the valve as one of the engineering objects 108A-N within the subset region.

The automation module 112 is configured to cause the processor 202 to modify metadata of the detected one or more engineering objects 108A and 108B by adjusting a plurality of layout parameters associated with the one or more engineering objects 108A and 108B. The plurality of layout parameters describe spatial and display-related attributes of the one or more engineering objects 108A and 108B and determine how the one or more engineering objects 108A and 108B are visually represented on the subset HMI screen. The plurality of layout parameters include attributes such as the position parameter, which specifies the exact location of the one or more engineering objects 108A and 108B on the subset HMI screen, and a screen resolution parameter, which dictates the graphical resolution and sharpness of the displayed elements. For example, a position parameter may define that a pump icon is located at coordinates (250, 400) on the subset HMI screen, while a screen resolution parameter ensures that the pump icon is rendered with clarity regardless of the screen size.

The automation module 112 is configured to cause the processor 202 to adjust the plurality of layout parameters by applying a scaling algorithm to the one or more screen parameters. The scaling algorithm is a mathematical or computational method designed to proportionally modify the plurality of layout parameters of the one or more engineering objects 108A and 108B to ensure consistency across different display environments. The input parameters for the scaling algorithm include the original layout parameters of the one or more engineering objects 108A and 108B, such as the original position parameter and the original screen resolution parameter, as well as the one or more screen parameters of the one or more HMI screens 106. The one or more screen parameters represent the physical or virtual attributes of the one or more HMI screens 106 where the subset HMI screen will be displayed. For instance, the one or more screen parameters include the size of the one or more HMI screens 106, which may vary between a 1080p desktop monitor and a 4K industrial touchscreen, and the location of the one or more HMI screens 106, which may determine whether the display is positioned in a control room or on a mobile device.

The scaling algorithm is configured to process a plurality of input parameters to generate the adjusted plurality of layout parameters that are compatible with the one or more screen parameters. Output parameters of the scaling algorithm include updated position parameters and updated screen resolution parameters for the one or more engineering objects 108A and 108B. For example, if a subset HMI screen is designed for a 1920x1080 resolution but needs to be displayed on a 3840x2160 screen, the scaling algorithm calculates new position parameters to ensure that the engineering objects 108A-N retain their proportional placement on the larger screen. The scaling algorithm is further configured to adjust a screen resolution parameter to enhance the graphical quality of the one or more engineering objects 108A and 108B without distortion.

The scaling algorithm ensures that the subset HMI screen maintains visual coherence when displayed on the one or more HMI screens 106. Visual coherence refers to the consistent and intuitive arrangement of the one or more engineering objects 108A and 108B on the subset HMI screen, ensuring that the subset HMI screen remains legible, aesthetically pleasing, and functionally effective across different display environments. For example, visual coherence ensures that the relative distances between engineering objects 108A-N, such as a motor and a connected pump, are preserved, and that labels or annotations remain aligned with their corresponding objects. Visual coherence prevents issues such as overlapping icons, misaligned text, or disproportionate scaling, which could compromise the usability of the subset HMI screen.

The automation module 112 is configured to cause the processor 202 to use the one or more screen parameters to ensure that the subset HMI screen is tailored to specific attributes of a target display environment. For example, the size of the one or more HMI screens 106 is essential for determining a scaling factor applied by the scaling algorithm. A subset HMI screen designed for a large industrial display may need to scale down for a smaller operator panel, requiring adjustments to both the position parameter and the screen resolution parameter. Similarly, the location of the one or more HMI screens 106 is critical for ensuring accessibility and usability. For instance, a subset HMI screen displayed on a mobile device may require additional scaling to accommodate touch-based interactions and smaller screen dimensions. By considering the one or more screen parameters, the automation module 112 ensures that the subset HMI screen is optimized for its intended display environment, preserving both functionality and visual coherence.

The automation module 112 is configured to cause the processor 202 to apply the adjusted plurality of layout parameters to the detected one or more engineering objects 108A and 108B. Application of the adjusted plurality of layout parameters comprises applying a parameter mapping algorithm that assigns updated position parameters and screen resolution parameters to corresponding graphical representations of the detected one or more engineering objects 108A and 108B on the subset HMI screen. The parameter mapping algorithm is an algorithm configured to ensure that the adjusted plurality of layout parameters, which are derived from the scaling process, overwrite original layout parameters stored in the metadata of the detected engineering objects 108A-N. For example, if the scaling algorithm determines that a pump icon should be repositioned to coordinates (350, 450) and rendered with a resolution enhancement, the parameter mapping algorithm applies these adjusted values to the graphical representation of the pump. The parameter mapping algorithm ensures that all detected engineering objects 108A-N are updated consistently with the adjusted layout parameters.

The automation module 112 is configured to cause the processor 202 to generate the subset HMI screen incorporating the modified metadata. The generation of the subset HMI screen is performed using a screen composition algorithm, which assembles the detected engineering objects 108A-N with their modified metadata into a coherent graphical layout. The screen composition algorithm processes the adjusted layout parameters and metadata of each detected engineering object 108A-N to determine their spatial arrangement and visual properties on the subset HMI screen. For example, the screen composition algorithm ensures that a motor icon is placed adjacent to a pump icon if the two engineering objects 108A-N are functionally connected in the industrial process. The screen composition algorithm also integrates additional graphical elements such as background grids, labels, and annotations to enhance the usability of the subset HMI screen. The screen composition algorithm ensures that all elements are arranged logically and consistently to provide a clear and intuitive user interface.

The automation module 112 is configured to cause the processor 202 to render the subset HMI screen based on the modified metadata. The rendering process is performed using a graphical rendering algorithm, which converts the metadata and layout parameters into a visually displayed subset HMI screen. The graphical rendering algorithm utilizes rendering techniques such as rasterization or vector-based rendering to draw the engineering objects 108A-N and associated elements onto the target display. For example, if the subset HMI screen includes a valve icon with a specific color and shape, the graphical rendering algorithm uses the modified metadata to render the valve icon with the appropriate attributes. The graphical rendering algorithm also ensures that the subset HMI screen is displayed at the correct resolution and aspect ratio based on the one or more screen parameters of the target HMI screen 106. The graphical rendering algorithm ensures that the subset HMI screen is visually accurate and meets the requirements of the display environment.

The subset HMI screen is configured to display information associated with the detected one or more engineering objects 108A and 108B. The configuration process is governed by the metadata of the detected engineering objects 108A-N, which includes attributes such as operational status, performance metrics, and control options. For example, the subset HMI screen may display a temperature reading next to a temperature sensor icon or show an active/inactive status indicator for a motor icon. The screen composition algorithm and graphical rendering algorithm work in tandem to ensure that the information associated with the detected engineering objects 108A-N is displayed in a clear and organized manner. The parameter mapping algorithm, screen composition algorithm, and graphical rendering algorithm automate the processes of layout adjustment, screen generation, and rendering, allowing operators to quickly and efficiently create subset HMI screens 106 without manual intervention. By automating these steps, the automation module 112 streamlines the creation of subset HMI screens 106 while maintaining accuracy and consistency.

The automation module 112 is configured to cause the processor 202 to receive a request for additional information associated with at least one detected engineering object 108A-N. The request for additional information is initiated by an operator or user interacting with a subset HMI screen. The request for additional information is typically received through a plurality of user input mechanisms, wherein user input mechanisms include, for example, mouse clicks, touch gestures on touchscreens, or keyboard shortcuts. For example, an operator monitoring the subset HMI screen interacts with an icon representing an engineering object 108A-N, such as a pump, by performing an action such as a mouse click to request additional information regarding the engineering object's current status, operational settings, or maintenance history.

The automation module 112 is configured to cause the processor 202 to execute an input processing algorithm to detect and process the request for additional information. The input processing algorithm identifies the specific engineering object 108A-N associated with the user interaction by mapping the location of the user input to a position parameter of the engineering object 108A-N displayed on the subset HMI screen. The automation module 112 is further configured to cause the processor 202 to display the additional information on the subset HMI screen. The additional information is retrieved from metadata associated with the detected engineering objects 108A-N. The metadata includes detailed attributes of the engineering objects 108A-N, such as operational parameters, historical data, and configuration settings. For example, metadata associated with an engineering object 108A-N, such as a motor, includes information regarding current operational speed, power consumption, maintenance schedules, and alert histories.

The additional information is displayed in a manner that enhances the operator's understanding of the engineering object 108A-N's status and functionality. The automation module 112 is configured to cause the processor 202 to execute a data rendering algorithm to format and present the additional information on the subset HMI screen. The data rendering algorithm determines a visual layout, font sizes, and graphical elements for displaying the additional information, ensuring the information is easily readable and contextually relevant. For example, when an engineering object 108A-N, such as a temperature sensor icon, is selected, the additional information displayed includes current temperature readings, historical temperature trends, and active alarms associated with the sensor.

The automation module 112 is configured to cause the processor 202 to display the additional information on the subset HMI screen to achieve multiple advantages. The additional information improves situational awareness by providing detailed insights into the behavior and performance of the detected engineering objects 108A-N. For example, when an engineering object 108A-N, such as a valve, is selected, the additional information displayed includes its maintenance history, operational status, and configuration settings. The additional information enables operators to make informed decisions regarding process adjustments or maintenance actions. Furthermore, the additional information enhances operational efficiency by reducing reliance on external systems or documentation. For instance, displaying the maintenance history of an engineering object 108A-N, such as a motor, directly on the subset HMI screen eliminates the necessity for operators to access separate maintenance logs, thereby saving time and effort.

The automation module 112 is configured to cause the processor 202 to provide flexibility in the manner in which additional information is displayed based on operational context and user preferences. For example, additional information can be displayed as a tooltip appearing upon hovering over an engineering object 108A-N, or in a dedicated information panel on the subset HMI screen. In another example, additional information can be presented in a pop-up window overlaying the subset HMI screen, providing a focused view of detailed engineering object 108AN information. The data rendering algorithm ensures that the additional information is visually coherent and consistent with the overall design and layout of the subset HMI screen. By integrating the additional information seamlessly into the subset HMI screen, the automation module 112 enhances user experience and supports efficient and accurate monitoring and control of the detected engineering objects 108A-N.

The automation module 112 is configured to cause the processor 202 to adjust the subset HMI screen to ensure it is dynamically updated based on real-time data associated with the detected engineering objects 108A-N. Real-time data includes continuously changing parameters such as operational statuses, performance metrics, and environmental variables. The automation module 112 employs a real-time data synchronization algorithm to retrieve updated data from the database 118 or directly from the industrial control system 102. For instance, if a detected engineering object 108A-N such as a temperature sensor sends updated temperature values, the subset HMI screen is configured to immediately reflect the new readings alongside graphical or numerical indicators.

The real-time data synchronization algorithm ensures that the information displayed on the subset HMI screen remains current and consistent with the actual state of the engineering objects 108AN within the industrial process. For example, if a pump represented as an engineering object 108A-N changes its operational status from "active" to "inactive," the real-time data synchronization algorithm dynamically updates the subset HMI screen to display the new status. This immediate feedback provides operators with actionable insights, enabling them to respond promptly to changing conditions in the industrial environment 100.

The automation module 112 is configured to cause the processor 202 to generate alerts and notifications associated with the detected engineering objects 108A-N on the subset HMI screen. Alerts and notifications are triggered based on pre-defined thresholds or conditions stored in the metadata of the engineering objects 108A-N or within the configuration settings of the industrial control system 102. For example, if a detected engineering object 108A-N, such as a pressure valve, exceeds its maximum allowable pressure rating, the subset HMI screen is configured to display a high-priority alert in the form of a visual cue (e.g., a red flashing icon) or an audible alarm. These alerts ensure that operators are immediately aware of critical events or anomalies within the industrial environment 100.

The automation module 112 is further configured to cause the processor 202 to log events and user interactions associated with the subset HMI screen. An event logging algorithm records details such as the time and date of an alert, the specific engineering objects 108A-N involved, and the actions taken by operators in response to the alert. For example, if an operator acknowledges an alert related to a motor overheating, the event logging algorithm stores this acknowledgment along with the operator's user ID and the steps taken to mitigate the issue. These logs are stored in the database 118 for future reference, enabling audit trails, post-event analysis, and compliance reporting.

The automation module 112 is configured to cause the processor 202 to support customization of the subset HMI screen based on user roles and preferences. Customization settings are stored as part of the user profile metadata in the industrial control system 102. For instance, a maintenance engineer may require access to detailed diagnostic data for engineering objects 108A-N, while a plant manager may prefer a high-level summary of operational metrics. The subset HMI screen dynamically adjusts its layout, displayed information, and functionality based on the logged-in user's role. For example, the subset HMI screen may display advanced troubleshooting tools for engineers while providing simplified navigation and performance dashboards for managers. This role-based customization improves usability and ensures that users have access to the most relevant information for their specific tasks.

The automation module 112 is further configured to cause the processor 202 to integrate external data sources into the subset HMI screen. External data sources may include third-party applications, external sensors, or cloud-based services accessed through the platform 110. For example, in a smart manufacturing setup, the subset HMI screen can be configured to display weather data from an external API to help operators make decisions related to temperature-sensitive processes. The integration of external data sources is managed through APIs and middleware components within the industrial control system 102. This capability allows the subset HMI screen to provide a comprehensive view of the industrial process by combining internal and external data streams.

The automation module 112 is configured to cause the processor 202 to support multi-screen environments for the subset HMI screen. Multi-screen environments allow operators to interact with multiple instances of the subset HMI screen simultaneously across different display devices. For example, one screen may display a subset HMI screen focused on a cooling system, while another displays a different subset HMI screen focused on a power generation system. The automation module 112 employs a screen synchronization algorithm to ensure that all screens remain consistent and synchronized in real-time. This functionality is particularly useful in large-scale industrial environments 100 where operators need to monitor and control multiple processes concurrently.

The automation module 112 is further configured to cause the processor 202 to enable collaboration among multiple operators using the subset HMI screen. Collaborative features include shared annotations, real-time chat, and simultaneous updates to the subset HMI screen. For example, if one operator highlights an area of concern on the subset HMI screen, the annotation is immediately visible to other operators working on different client devices 120A-N. This collaborative functionality is facilitated through the network interface 116 and the platform 110, ensuring seamless communication and coordination among team members in the industrial environment 100.

By automating these processes, the automation module 112 ensures that the subset HMI screen remains an intuitive, efficient, and powerful tool for monitoring and controlling industrial processes. The integration of real-time updates, alerts, role-based customization, external data sources, multi-screen environments, and collaborative features enhances the overall functionality of the subset HMI screen, providing operators with the tools they need to optimize the performance of the industrial environment 100.

FIG. 3 is a block diagram of the automation module 112, as illustrated in FIG. 2, in which an embodiment of the present invention can be implemented. In FIG. 3, the automation module 112 comprises a screen request handler module 302, a metadata extraction module 304, a layout adjustment module 306, a contextual data processing module 308, an engineering object metadata repository 310, a screen validation module 312, and a screen rendering module 314. FIG. 3 is explained in conjunction with FIG. 1 and FIG. 2.

The screen request handler module 302 is configured to receive requests for generating a subset HMI screen 106 for the industrial control system. For instance, the request can be received from one of the one or more users external to the industrial environment 100 via the network 104. Alternatively, the request can be received from one or more client devices 120A-N via the network 104. The request specifies the subset region to be selected from the superset HMI screen 106.

The metadata extraction module 304 is configured to identify and extract metadata associated with the plurality of engineering objects 108A-N located within the selected subset region. The extracted metadata includes attributes such as object type, position, dimensions, and operational parameters, which are essential for accurately generating the subset HMI screen 106.

The layout adjustment module 306 is configured to adjust a plurality of layout parameters for the detected engineering objects 108A-N based on the one or more screen parameters of the target HMI screen 106. These layout parameters include position, size, and scaling attributes. The module ensures that the detected engineering objects 108A-N are proportionally scaled and aligned to fit within the subset HMI screen 106, maintaining visual consistency and usability.

The contextual data processing module 308 is configured to process the extracted metadata and enhance it by integrating additional contextual information. This includes analyzing relationships between the detected engineering objects 108A-N, as well as extracting operational data, such as real-time performance metrics or control settings, to be displayed on the subset HMI screen 106.

The engineering object metadata repository 310 is configured to store the metadata associated with the detected engineering objects 108A-N. This repository acts as a centralized database, ensuring that metadata can be retrieved and reused for subsequent screen generation processes or for maintaining consistency across multiple HMI screens 106.

The screen validation module 312 is configured to validate the generated subset HMI screen 106. Validation ensures that the layout, metadata, and contextual information displayed on the subset HMI screen 106 are accurate, functional, and compatible with the operational requirements of the industrial control system. The module also simulates the subset HMI screen 106 to ensure that the screen performs as expected in the target environment.

The screen rendering module 314 is configured to render the validated subset HMI screen 106. This module applies graphical rendering techniques to display the adjusted engineering objects and associated metadata on the target HMI screen 106. The rendered screen is optimized for the specific screen resolution, size, and aspect ratio of the target display, ensuring a seamless and user-friendly interface.

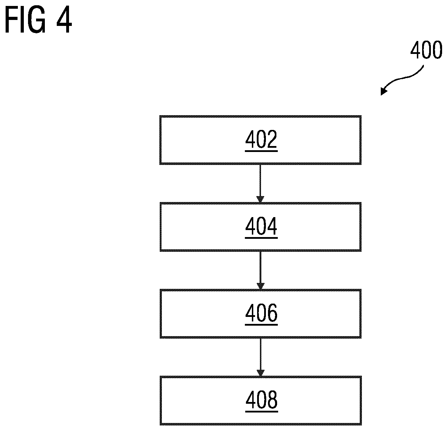

FIG 4 is a process flowchart illustrating an exemplary method of automatically generating subset human-machine interface (HMI) screen within an industrial control system, according to an embodiment of the present invention.

At step 402, a subset region selection is captured from a superset HMI screen 106. The pixel coordinates of the subset region are recorded via a cropping tool. The cropping tool enables precise definition of the area of interest within the superset HMI screen 106.

At step 404, one or more engineering objects 108A and 108B within the subset region are detected. The detection is performed by comparing one or more spatial attributes of the subset region against one or more object definitions stored in a knowledge repository 126. The spatial attributes of the subset region include coordinates, dimensions, and shapes. The object definitions in the knowledge repository 126 include predefined characteristics such as size, position, and geometry.

At step 406, metadata of the detected one or more engineering objects 108A and 108B is modified. The modification involves adjusting a plurality of layout parameters associated with the one or more engineering objects 108A and 108B. The plurality of layout parameters are adjusted based on one or more screen parameters of one or more HMI screens 106. The layout parameters include position, size, and resolution attributes. The screen parameters include display size, resolution, and aspect ratio of the target HMI screens 106.

At step 408, a subset HMI screen is generated incorporating the modified metadata. The subset HMI screen is configured to display information associated with the detected one or more engineering objects 108A and 108B. The generation of the subset HMI screen reduces the human effort required for subset screen creation through automation. The displayed information includes operational parameters, performance metrics, and control options for the detected engineering objects 108A-N.

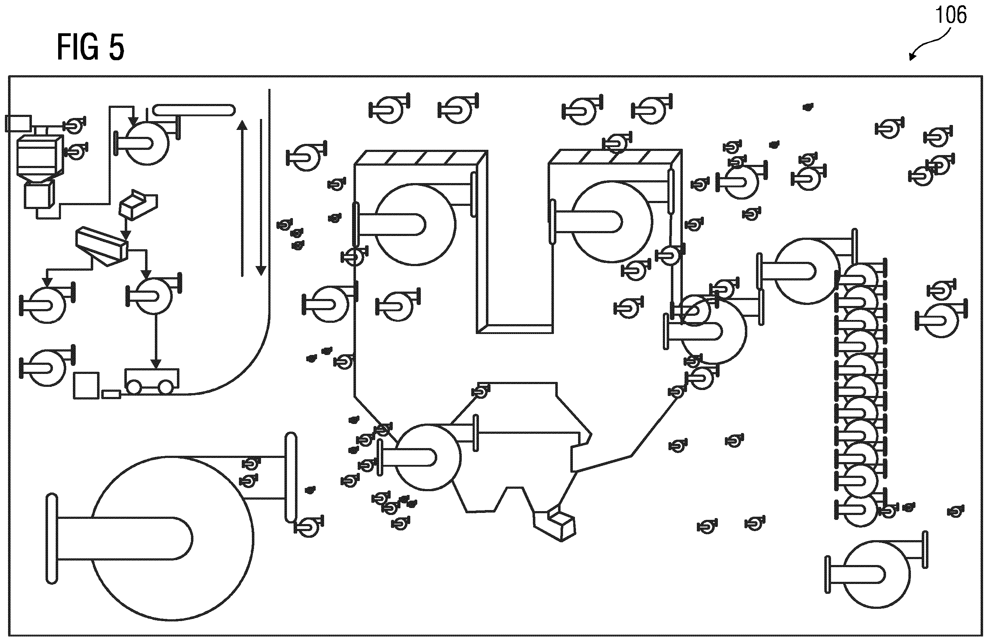

FIG. 5 is an exemplary illustration of a superset Human-Machine Interface (HMI) screen 106, according to an embodiment of the present invention. The superset HMI screen 106 provides a comprehensive graphical representation of an industrial system, encompassing multiple subsystems and components within a single interface. The superset HMI screen 106 displays an extensive array of real-time data, control elements, and system statuses, allowing operators to monitor and manage various aspects of the industrial environment.

The superset HMI screen 106 is designed to include all relevant operational details and parameters, such as process flows, equipment statuses, alarms, and user interaction controls. It features a combination of graphical icons, numerical displays, and color-coded indicators to convey information efficiently. The superset HMI screen 106 is arranged to include hierarchical and organized sections, enabling the operator to navigate and focus on specific processes or areas as needed.

Overall, the superset HMI screen 106 serves as a centralized hub for managing the industrial system, offering a holistic view of operations while supporting decision-making, troubleshooting, and optimization.

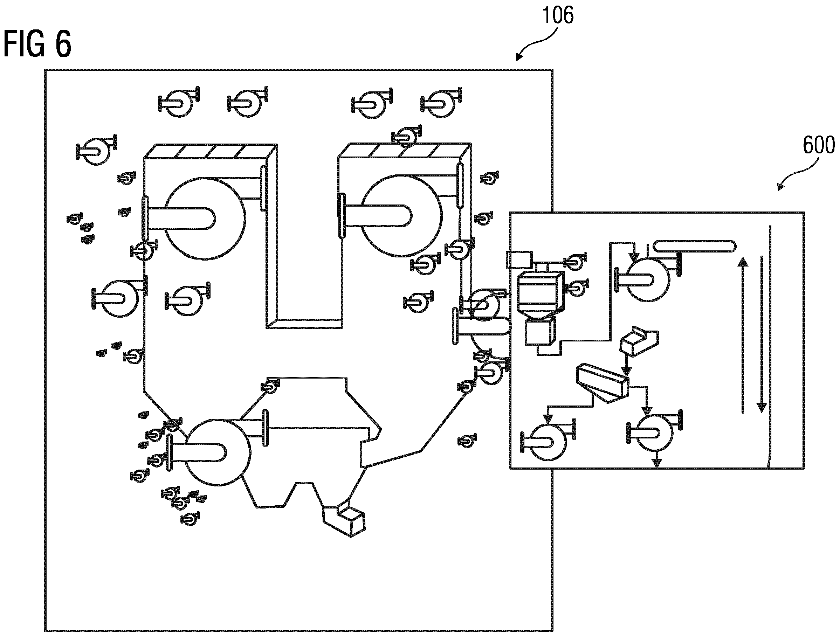

FIG 6 is a exemplary illustration of a subset Human Machine Interface (HMI) screen 600, according to an embodiment of the present invention.

The subset Human Machine Interface (HMI) 600 screen represent a subset view of the larger superset HMI screen 106, focusing on a particular area or subsystem within the industrial environment. The subset Human Machine Interface (HMI) screen 600 is designed to provide granular information and controls for specific processes, equipment, or operational units.

The subset HMI screen 600 includes graphical representations of components, real-time data displays, and interactive controls for monitoring and managing specific aspects of the system. They are optimized for smaller screen sizes while retaining the essential functionalities and data relevant to the operator's tasks. This targeted design allows operators to efficiently focus on individual units or processes without being overwhelmed by the entirety of the system.

Overall, the subset HMI screen 600 serves as specialized interfaces, complementing the superset HMI screen by providing detailed insights and control capabilities for localized areas within the industrial system.

The present invention can take a form of a computer program product comprising program modules accessible from computer-usable or computer-readable medium storing pro-gram code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical comput-er-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in meth-od claims may also be apply to system/apparatus claims.

### LIST OF REFERENCE SIGNS

**100** - Industrial Environment.
**102** - Industrial Control System.
**104** - Network (e.g., LAN, WAN, Wi-Fi, Internet).
**106** - Superset Human-Machine Interface (HMI) Screen.
**108A-N** - Engineering Objects.
**112** - Automation Module.
**114** - Server.
**116** - Network Interface.
**118** - Database.
**120A-N** - Client Devices / User Devices.
**122A-N** - Engineering Tool (on Client Devices).
**126** - Knowledge Repository (containing predefined object definitions).
**202** - Processing Unit (Processor).
**204** - Memory.
**206** - Storage Unit.
**208** - Communication Interface.
**210** - Input-Output Unit.
**212** - Network Interface.
**214** - Bus.
**216** - Integrated Development Environment (IDE).
**302** - Screen Request Handler Module (Automation Module Subsystem).
**304** - Metadata Extraction Module (Automation Module Subsystem).
**306** - Layout Adjustment Module (Automation Module Subsystem).
**308** - Contextual Data Processing Module (Automation Module Subsystem).
**310** - Engineering Object Metadata Repository.
**312** - Screen Validation Module.
**314** - Screen Rendering Module.
**600** - Subset Human-Machine Interface (HMI) Screen.

## Claims

1. A method for generating a subset human-machine interface (HMI) screen for an industrial control system (102), the method comprising:
capturing, from a superset HMI screen (106), a subset region selection by recording pixel coordinates of a subset region via a cropping tool;
detecting one or more engineering objects (108A-N) within the subset region by comparing one or more spatial attributes of the subset region against one or more object definitions stored in a knowledge base (126);
modifying metadata of the detected one or more engineering objects (108A-N) by adjusting a plurality of layout parameters associated with the one or more engineering objects (108A-N), wherein the plurality of layout parameters are adjusted based on one or more screen parameters of one or more HMI screens (106); and
generating a subset HMI screen (600) incorporating the modified metadata, wherein the subset HMI screen (600) is configured to display information associated with the detected one or more engineering objects (108A-N), thereby reducing a human effort required for subset screen creation through automation.

2. The method of claim 1, wherein the plurality of layout parameters are retrieved from the knowledge base (126).

3. The method of claim 1 or 2, wherein the plurality of layout parameters comprises:
a screen resolution parameter; and
a position parameter of the subset HMI screen (600).

4. The method of any one of the preceding claims, wherein the one or more screen parameters of the one or more HMI screens (106) comprises:
a size of the one or more HMI screens (106); and
a location of the one or more HMI screens (106).

5. The method of any one of the preceding claims, wherein the method further comprises:
receiving a request for additional information on the detected one or more engineering objects (108A-N); and
displaying the additional information on the subset HMI screen (600).

6. The method of any one of the preceding claims, wherein the plurality of layout parameters are modified by application of a scaling algorithm on the one or more screen parameters.

7. The method of any one of the preceding claims, wherein the scaling algorithm is configured to adjust the plurality of layout parameters to ensure that the subset HMI screen (600) maintains visual coherence when displayed on the one or more HMI screens (106).

8. The method of any one of the preceding claims, wherein detecting the one or more engineering objects (108A-N) within the subset region comprises:
identifying one or more coordinates and one or more dimensions of the subset region based on the recorded pixel coordinates;
retrieving the predefined object definitions from the knowledge base (126), wherein the predefined object definitions include a plurality of spatial attributes such as size, shape, and position;
comparing the identified one or more coordinates and the one or more dimensions of the subset region with the spatial attributes of the predefined object definitions; and
determining a plurality of matches between the subset region and the predefined object definitions to identify the one or more engineering objects (108A-N) within the subset region.

9. The method of any one of the preceding claims, wherein generating the subset HMI screen (600) incorporating the modified metadata comprises:
applying the adjusted layout parameters to the detected engineering objects (108A-N); and
rendering the subset HMI screen (600) based on the modified metadata.

10. The method of any one of the preceding claims, wherein the subset HMI screen (600) is a graphical interface generated from a superset HMI screen (106), configured to display detailed information for a selected region or process of an industrial system (100).

11. The method of any one of the preceding claims, wherein the superset HMI screen (106) is a graphical interface representing an overall process overview of an industrial system (100).

12. An industrial control system (102) for generating a subset human-machine interface (HMI) screen for the industrial control system (102), the industrial control system (102) comprising:
a) one or more processor(s) (202); and
b) a memory (204) communicatively coupled to the one or more processor(s), wherein the memory (204) stores an automation module (112) in the form of machine-readable instructions executable by the one or more processor(s),
wherein the automation module (112) is configured to perform the method of any of claims 1 to 11.

13. A computer program product for generating a subset human-machine interface (HMI) screen for an industrial control system (102), the computer program product comprising machine-readable instructions stored on a non-transitory computer-readable medium, the instructions, when executed by one or more processors (202), causing the one or more processors (202) to perform the method of any of claims 1 to 11.
